(19) Europäisches Patentamt
European Patent Office
Office européen des brevets

(11) EP 4 541 452 A1

(12) **EUROPEAN PATENT APPLICATION**
published in accordance with Art. 153(4) EPC

(43) Date of publication:
23.04.2025 Bulletin 2025/17

(21) Application number: 23850344.5

(22) Date of filing: 27.07.2023

(51) International Patent Classification (IPC):
*B01D 63/02* (2006.01)     *H01M 8/04119* (2016.01)
*C08L 71/12* (2006.01)     *C08L 25/10* (2006.01)

(52) Cooperative Patent Classification (CPC):
B01D 63/02; C08L 25/10; C08L 71/12;
H01M 8/04119; Y02E 60/50

(86) International application number:
PCT/KR2023/010918

(87) International publication number:
WO 2024/029840 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.08.2022 KR 20220097446

(71) Applicant: Kolon Industries, Inc.
Seoul 07793 (KR)

(72) Inventors:
• LEE, Ah Reum
  Seoul 07793 (KR)
• OH, Young Seok
  Seoul 07793 (KR)
• LEE, Ji Yoon
  Seoul 07793 (KR)

(74) Representative: Vossius & Partner
Patentanwälte Rechtsanwälte mbB
Siebertstrasse 3
81675 München (DE)

(54) **HOLLOW FIBER MEMBRANE CARTRIDGE, HUMIDIFIER FOR FUEL CELL, AND FUEL CELL INCLUDING SAME**

(57) The present invention relates to a hollow fiber membrane cartridge, a humidifier for a fuel cell, and the fuel cell including same. The hollow fiber membrane cartridge has excellent heat and hydrolysis resistance and has a heat deflection temperature of 120 °C or higher and a hygroscopicity of 1% or less, and thus can minimize the degradation of mechanical properties and dimensional change that can occur during the use of the fuel cell and thereby increase the durability of a product.

FIG. 1

EP 4 541 452 A1

**Description**

[TECHNICAL FIELD]

The present disclosure relates to a hollow fiber membrane cartridge having heat resistance and hydrolysis resistance to a high-temperature, high-humidity humidifying fluid, a humidifier for a fuel cell, and a fuel cell including the same.

[Background Art]

A fuel cell is a power generation cell that combines hydrogen and oxygen to generate electricity. The fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is higher than efficiency of an internal combustion engine.

In addition, the fuel cell directly converts chemical energy generated by combination of hydrogen and oxygen into electrical energy, whereby the amounts of contaminants that are discharged are small. Consequently, the fuel cell has advantages in that the fuel cell is environmentally friendly and in that a concern about depletion of resources due to an increase in energy consumption can be reduced.

Among different types of fuel cells, a polymer electrolyte membrane fuel cell (PEMFC) is known as being favorable to a transportation system as well as small-scale stationary power generation equipment, since the polymer electrolyte membrane fuel cell is operated at low temperatures and the output density of the polymer electrolyte membrane fuel cell is high, whereby it is possible to miniaturize the polymer electrolyte membrane fuel cell.

One of the important factors in improving the performance of the polymer electrolyte membrane fuel cell (PEMFC) is to supply more than a predetermined amount of moisture to a polymer electrolyte membrane or a proton exchange membrane (PEM) of a membrane electrode assembly (MEA) in order to retain moisture content. In order to retain the moisture content, humidification is required.

A hollow fiber membrane having large transmission area per unit volume may be used as a permselective membrane used for humidification. When a humidifier is manufactured using the hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at high temperatures and to reuse the collected moisture and heat through the humidifier.

During a humidification process in the humidifier using the hollow fiber membrane, the humidifier is used while being exposed to a high-temperature, high-humidity humidifying fluid, and therefore a material constituting the humidifier is required to be heat-resistant and hydrolysis-resistant. Consequently, it is necessary to develop a material for humidifiers having excellent heat resistance and hydrolysis resistance.

[Disclosure]

[Technical Problem]

An embodiment of the present disclosure, which has been made in view of the above, provides a hollow fiber membrane cartridge having excellent heat resistance.

Another embodiment of the present disclosure provides a hollow fiber membrane cartridge having excellent hydrolysis resistance.

Another embodiment of the present disclosure provides a hollow fiber membrane cartridge having excellent mechanical properties and dimensional stability.

Another embodiment of the present disclosure seeks to provide a humidifier for a fuel cell including the hollow fiber membrane cartridge.

A further embodiment of the present disclosure provides a fuel cell including the humidifier for a fuel cell.

[Technical Solution]

In order to accomplish the above objects, the embodiments of the present disclosure may include the following constructions.

A hollow fiber membrane cartridge according to an embodiment of the present disclosure may include an inner case having an inner space, a plurality of hollow fiber membranes disposed in the inner space of the inner case, a first porting portion disposed on one side of the inner case, the first porting portion being configured to fix one side of each of the plurality of hollow fiber membranes, and a second porting portion disposed on the other side of the inner case, the second porting portion being configured to fix the other side of each of the plurality of hollow fiber membranes. The inner case may have a heat distortion temperature of 120 °C or higher and a hygroscopicity of 1% or less.

The inner case may have a hygroscopicity of 0.5% or less.

The inner case may include a polymer resin.

The polymer resin may include at least one selected from among polyphenylene ether (PPE), polyphenylsulfone (PPSU), polysulfone (PSU), polyetheretherketone (PEEK), and polyarylate (PAR).

Polyphenylene ether (PPE) may be polyphenylene ether (m-PPE) modified by a polystyrene-butadiene copolymer (HIPS).

M-PPE may include 90 to 99 wt% of polyphenylene ether (PPE) and 1 to 10 wt% of a polystyrene-butadiene copolymer (HIPS) based on the total weight of m-PPE.

The inner case may have a weight reduction rate of 10% or less after high temperature and high humidity treatment.

Here, the high temperature and high humidity treatment means that the inner case is placed in an autoclave containing water, the temperature of the autoclave is set to 120 °C $\pm$ 3 °C, and high temperature and high humidity treatment is performed for 200 hours.

The inner case may have a coefficient of thermal expansion (CTE) of $100 \times 10^{-6}$ mm/mm/°C or less.

The inner case may have a specific gravity of 1.5 g/cm$^3$ or less.

A humidifier for a fuel cell according to another embodiment of the present disclosure may include a mid-case having an inner space, an off-gas inlet, and an off-gas outlet, the hollow fiber membrane cartridge disposed in the inner space of the mid-case, a first cap coupled to one end of the mid-case, and a second cap coupled to the other end of the mid-case.

A fuel cell according to a further embodiment of the present disclosure may include a cell stack and the humidifier connected to the cell stack.

[Advantageous Effects]

A hollow fiber membrane cartridge according to an embodiment of the present disclosure may have excellent heat resistance, and may have excellent hydrolysis resistance.

In addition, the hollow fiber membrane cartridge according to the embodiment of the present disclosure may have excellent mechanical properties and dimensional stability.

A humidifier for a fuel cell according to another embodiment of the present disclosure including the hollow fiber membrane cartridge may have excellent heat resistance, hydrolysis resistance, mechanical properties, and dimensional stability.

A fuel cell according to a further embodiment of the present disclosure including the humidifier for the fuel cell may have excellent heat resistance, hydrolysis resistance, mechanical properties, and dimensional stability. The fuel cell according to the further embodiment of the present disclosure may have excellent durability and long lifespan characteristics, and may prevent or inhibit problems such as breakage or failure.

[Description of Drawings]

FIG. 1 is a schematic perspective view of a hollow fiber membrane cartridge according to an embodiment of the present disclosure.

FIG. 2 is a perspective view of a hollow fiber membrane according to an embodiment of the present disclosure.

FIG. 3 is a schematic exploded perspective view of a humidifier for a fuel cell according to another embodiment of the present disclosure.

[Best Mode]

The present disclosure may be variously changed and may have various embodiments, wherein specific embodiments will be described hereinafter in detail with reference to the accompanying drawings.

When "have" or "include" mentioned in this specification is used, other parts may be added unless "only" is used. When a component is expressed in the singular, the component includes the plural unless otherwise expressly stated. Also, in interpreting a component, the component is interpreted as including an error range even if there is no explicit description thereof.

Although the terms "first", "second", etc. may be used herein to describe various components, these components are not limited by the terms, and the terms are only used to distinguish one component from another.

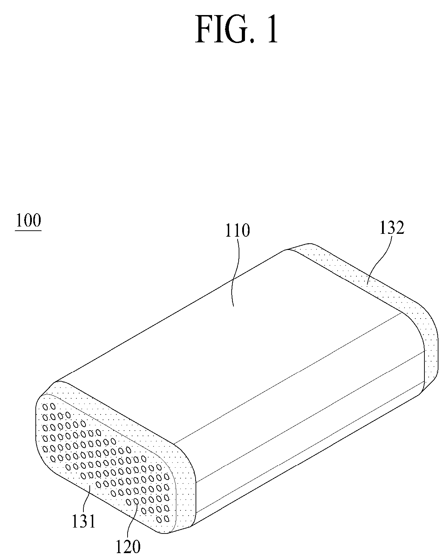

FIG. 1 is a schematic perspective view of a hollow fiber membrane cartridge 100 according to an embodiment of the present disclosure.

Referring to FIG. 1, the hollow fiber membrane cartridge 100 according to the embodiment of the present disclosure may include an inner case 110, a plurality of hollow fiber membranes 120, a first potting portion 131, and a second potting portion 132.

The inner case 110 may have an inner space. The inner case 110 may have a box shape with open ends. One of the open ends of the inner case 110 may be referred to as one side, and the other may be referred to as the other side.

The plurality of hollow fiber membranes 120 may be disposed in the inner space of the inner case 110.

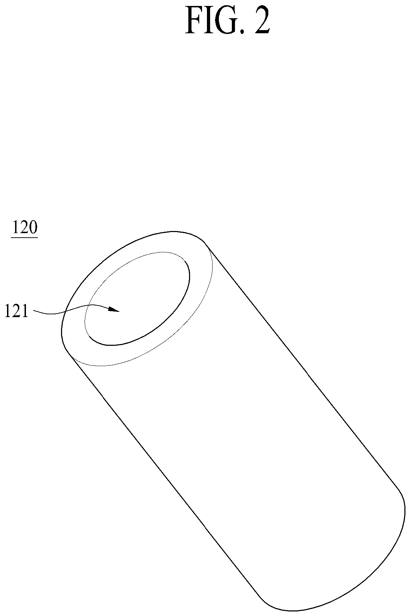

FIG. 2 is a perspective view of a hollow fiber membrane 120 according to an embodiment of the present disclosure.

Referring to FIG. 2, the hollow fiber membrane 120 according to the embodiment of the present disclosure may have a hollow 121. For example, the hollow fiber membrane 120 may have a tubular shape including a hollow center. Any commercially available hollow fiber membrane may be as the hollow fiber membrane 120.

According to an embodiment of the present disclosure, one end of the tubular hollow fiber membrane 120 is referred to as one side, and the other end is referred to as the other side.

The first potting portion 131 may be coupled to one side of the inner case 110 to fix one side of each of the plurality of hollow fiber membranes 120. The second potting portion 132 may be coupled to the other side of the inner case 110 to fix the other side of each of the plurality of hollow fiber membranes 120.

Opposite ends of the hollow fiber membrane cartridge 100 are potted by the first potting portion 131 and the second potting portion 132. In this case, the first potting portion 131 and the second potting portion 132 may be formed so as not to block the hollows of the plurality of hollow fiber membranes 120. The first potting portion 131 and the second potting portion 132 are typically formed by hardening a liquid polymer, such as a liquid polyurethane (PU) resin, using a casting method.

An inner case 110 according to an embodiment of the present disclosure may have a heat distortion temperature of 120 °C or higher.

The heat distortion temperature may be measured using a specimen of the inner case 110. The specimen of the inner case 110 is, for example, a specimen made of a material for the inner case. Hereinafter, the specimen of the inner case 110 is also referred to as a "specimen".

According to an embodiment of the present disclosure, the heat distortion temperature may be measured according to ASTM D 648. In order to measure the heat distortion temperature, an unannealed specimen having a thickness of 4 mm is prepared. The temperature at which the specimen is bent by 0.25 mm when a pressure stress of 1.8 MPa is applied to the specimen while the temperature is increased from room temperature (25 °C) at a rate of 2 °C/min is called the heat distortion temperature.

If the heat distortion temperature of the inner case 110 is less than 120 °C, the dimensions or shape of the inner case may be changed by a hot humidifying fluid. This may result in delamination of the adhesive interface between the first potting portion 131 and the inner case 110 or the adhesive interface between the second potting portion 132 and the inner case 110.

The heat distortion temperature of the inner case 110 according to the embodiment of the present disclosure may be, for example, 140 °C or higher.

More specifically, the heat distortion temperature of the inner case 110 according to the embodiment of the present disclosure may be 150 °C or higher, or may be 160 °C or higher.

The inner case 110 according to the embodiment of the present disclosure may have a hygroscopicity of 1% or less.

The hygroscopicity may be obtained, for example, by immersing the specimen of the inner case 110 in water at 23 °C for 24 hours and then measuring the amount of moisture absorption of the specimen according to ASTM D 570.

The hygroscopicity may be measured by Equation 1 below.

$$[\text{Equation 1}]$$

$$\text{Hygroscopicity (\%)} = \frac{\text{specimen weight after moisture absorption} - \text{initial specimen weight}}{\text{initial specimen weight}} \times 100$$

If the hygroscopicity is greater than 1%, continuous supply of a high-temperature, high-humidity humidifying fluid to the inner case 110 may increase the probability of hydrolysis of the inner case 110, and may degrade the mechanical properties, resulting in breakage and failure of the inner case 110.

The hygroscopicity of the inner case 110 according to the embodiment of the present disclosure may be, for example, 0.5% or less, or may be 0.3% or less.

The inner case 110 according to the embodiment of the present disclosure may include a polymer resin.

The polymer resin may include at least one selected from among polyphenylene ether (PPE), polyphenylsulfone (PPSU), polysulfone (PSU), polyetheretherketone (PEEK), and polyarylate (PAR).

Polyphenylene ether (PPE) may be, for example, polyphenylene ether (m-PPE) modified by a polystyrene-butadiene copolymer (HIPS). According to an embodiment of the present disclosure, m-PPE refers to polyphenylene ether (PPE) modified by a polystyrene-butadiene copolymer (HIPS) .

According to an embodiment of the present disclosure, m-PPE may include 90 to 99 wt% of polyphenylene ether (PPE) and 1 to 10 wt% of a polystyrene-butadiene copolymer (HIPS) based on the total weight of m-PPE.

If the content of polyphenylene ether (PPE) is less than 90 wt% based on the total weight of m-PPE, problems with heat resistance or mechanical strength may be caused, and if the content of polyphenylene ether (PPE) is more than 99 wt%, it is difficult to exhibit the properties of HIPS and problems with moldability may be caused, since the proportion of PPE is too large.

According to an embodiment of the present disclosure, m-PPE may have an Mw molecular weight (weight average molecular weight) of 70,000 to 100,000.

According to an embodiment of the present disclosure, the inner case 110 may have excellent hydrolysis resistance.

If the inner case 110 does not have hydrolysis resistance, the polymer constituting the inner case 110 may be hydrolyzed by a high-temperature, high-humidity humidifying fluid. In addition, this may cause the mechanical properties of the inner case 110 to rapidly deteriorate. As a result, delamination may occur between the inner case 110 and the potting portions 131 and 132 of the hollow fiber membrane cartridge 100.

According to an embodiment of the present disclosure, the hydrolysis resistance of the inner case 110 may be evaluated by a weight reduction rate of the inner case 110.

The inner case 110 according to the embodiment of the present disclosure has excellent hydrolysis resistance, resulting in little or very little weight reduction even after high temperature and high humidity treatment.

The inner case 110 according to the embodiment of the present disclosure may have a weight reduction rate (WR) of 10% or less.

The weight reduction rate (WR) may be measured according to Equation 2 below.

$$[Equation\ 2]$$
$$WR(\%) = \frac{W1-W2}{W1} \times 100$$

In Equation 2, W1 is the weight of the specimen of the inner case 110 before high temperature and high humidity treatment, and W2 is the weight of the specimen of the inner case 110 after the high temperature and high humidity treatment.

As high temperature and high humidity treatment conditions for measuring the weight reduction rate (WR) according to an embodiment of the present disclosure, the specimen of the inner case 110 is placed in an autoclave containing water, the temperature of the autoclave is set to 120 °C ± 3 °C, and high temperature and high humidity treatment is performed for 200 hours. For example, a product from JAOTECH may be used as the autoclave.

According to an embodiment of the present disclosure, the inner case 110 may have excellent hydrolysis resistance, whereby no or minimal shape deformation or chemical change of the inner case occurs even after high temperature and high humidity treatment.

As one method of evaluating the degree of shape deformation or chemical change of the inner case 110, the delamination characteristics between the inner case 110 and the potting portions 131 and 132 may be evaluated.

In order to evaluate the delamination characteristics, according to an embodiment of the present disclosure, the hollow fiber membrane cartridge 100 may be subjected to high temperature and high humidity treatment, and delamination between the inner case 110 and the potting portions 131 and 132 may be checked. The autoclave may be used to subject the hollow fiber membrane cartridge 100 to high temperature and high humidity treatment.

As the high temperature and high humidity treatment conditions for evaluating the delamination characteristics according to an embodiment of the present disclosure, the hollow fiber membrane cartridge 100 is placed in an autoclave containing water, the temperature of the autoclave is set to 120 °C ± 3 °C, and high temperature and high humidity treatment is performed for 200 hours.

According to an embodiment of the present disclosure, delamination between the inner case 110 and the potting portions 131 and 132 is evaluated as occurring when the inner case 110 and the potting portions 131 and 132 are spaced apart from each other or separated from each other.

According to an embodiment of the present disclosure, delamination between the inner case 110 and the potting portions 131 and 132 does not occur in the hollow fiber membrane cartridge 100 even after high temperature and high humidity treatment.

According to an embodiment of the present disclosure, delamination between the inner case 110 and the potting portions 131 and 132 does not occur, whereby failure of or damage to a humidifier or fuel cell including the inner case 110 may be prevented.

The inner case 110 according to the embodiment of the present disclosure may have a coefficient of thermal expansion (CTE) of $100 \times 10^{-6}$ mm/mm/°C or less.

The coefficient of thermal expansion may be measured, for example, using a thermomechanical analyzer (TMA) in accordance with a TMA-method and ASTM E 696. For example, Q400 from TA Instrument may be used as the thermomechanical analyzer (TMA).

If the coefficient of thermal expansion is greater than $100 \times 10^{-6}$ mm/mm/°C, the dimensional changes may be increased by repeated temperature changes during use, and the resulting stress buildup may result in delamination of the adhesive interface between the inner case 110 and the potting portions 131 and 132 or failure of the humidifier or fuel cell including the inner case 110 due to breakage.

The inner case 110 according to the embodiment of the present disclosure may have a specific gravity of 1.5 g/cm$^3$ or less.

The specific gravity of the inner case 110 may be measured, for example, according to ASTM D 792. The inner case 110 according to the embodiment of the present disclosure may have low specific gravity while having excellent mechanical properties, which may contribute to a lightweight product design.

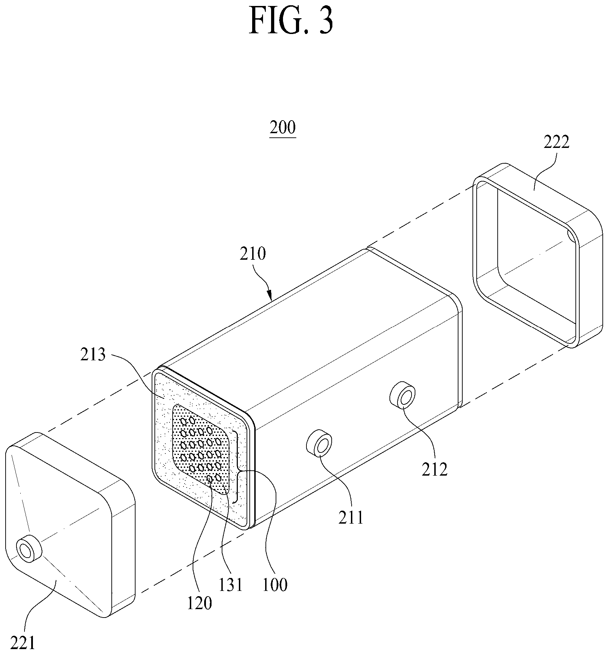

FIG. 3 is a schematic exploded perspective view of a humidifier 200 for a fuel cell according to another embodiment of the present disclosure.

Referring to FIG. 3, the humidifier 200 for the fuel cell according to the other embodiment of the present disclosure may include a mid-case 210, a first cap 221, and a second cap 222.

The mid-case 210 may have an inner space. At least one hollow fiber membrane cartridge 100 may be disposed in the inner space of the mid-case 210.

The mid-case 210 may have a box shape with open ends. One of the open ends of the mid-case 210 may be referred to as one end, and the other may be referred to as the other end.

The first cap 221 may be coupled to one end of the mid-case 210. The second cap 222 may be coupled to the other end of the mid-case 210.

A resin layer 213 may be disposed between the mid-case 210 and the hollow fiber membrane cartridge 100 to allow the hollow fiber membrane cartridge 100 to be fixed to the mid-case 210. For example, the resin layer 213 may be disposed at one end and the other end of the mid-case 210.

One space may be formed by the first cap 221 and the resin layer 213, and another space may be formed by the second cap 222 and the resin layer 213. A further space may be formed by the resin layer 213 disposed at one end of the mid-case 210 and the resin layer 213 disposed at the other end of the mid-case 210.

The resin layer 213 may be disposed in the inner space of the mid-case 210, for example, using a casting method. The resin layer 213 may be formed by hardening a liquid polymer, such as a liquid polyurethane (PU) resin.

The mid-case 210 may include an off-gas inlet 211 and an off-gas outlet 212. Off-gas introduced into the mid-case 210 through the off-gas inlet 211 may come into contact with outer surfaces of the plurality of hollow fiber membranes 120 and may be discharged from the mid-case 210 through the off-gas outlet 212. When the off-gas contacts the outer surfaces of the plurality of hollow fiber membranes 120, moisture contained in the off-gas may permeate the plurality of hollow fiber membranes 120, thereby humidifying air flowing along hollows of the plurality of hollow fiber membranes 120.

A further embodiment of the present disclosure provides a fuel cell including a cell stack (not shown) and the humidifier 200 for the fuel cell connected to the cell stack.

Hereinafter, the present disclosure will be described with reference to more specific examples and a comparative example. However, the following examples are provided only for easier understanding of the present disclosure and do not limit the scope of the present disclosure.

<Example 1>

(1) Manufacture of inner case 110

M-PPE (Mw molecular weight: 85,000) including polyphenylene ether (PPE) and a polystyrene-butadiene copolymer (HIPS), as a polymer resin, was melted and molded to manufacture an inner case 110 having an inner space.

(2) Manufacture of hollow fiber membrane cartridge 100

A bundle of hollow fiber membranes 120 was placed in the inner space of the inner case 110.

Polyurethane (PU) was prepared to form a first potting portion 131 and a second potting portion 132.

The first potting portion 131 was formed on one side of the inner case 110 and the second potting portion 132 was formed on the other side of the inner case 110 such that the hollow fiber membranes 120 were fixed to the inner case 110 using a casting method.

As such, a hollow fiber membrane cartridge 100 according to Example 1 was manufactured.

<Example 2>

(1) Manufacture of inner case 110
An inner case 110 was manufactured in the same manner as in (1) of Example 1, except that polyphenylsulfone (PPSU) was used instead of m-PPE.
(2) Manufacture of hollow fiber membrane cartridge 100

A hollow fiber membrane cartridge 100 was manufactured in the same manner as in (2) of Example 1, except that the inner case 110 made of polyphenylsulfone (PPSU) was used.

<Example 3>

(1) Manufacture of inner case 110
An inner case 110 was manufactured in the same manner as in (1) of Example 1, except that polysulfone (PSU) was used instead of m-PPE.
(2) Manufacture of hollow fiber membrane cartridge 100

A hollow fiber membrane cartridge 100 was manufactured in the same manner as in (2) of Example 1, except that the inner case 110 made of polysulfone (PSU) was used.

<Example 4>

(1) Manufacture of inner case 110
An inner case 110 was prepared in the same manner as in (1) of Example 1, except that polyetheretherketone (PEEK) was used instead of m-PPE.
(2) Manufacture of hollow fiber membrane cartridge 100

A hollow fiber membrane cartridge 100 was manufactured in the same manner as in (2) of Example 1, except that the inner case 110 made of polyetheretherketone (PEEK) was used.

<Example 5>

(1) Manufacture of inner case 110
An inner case 110 was manufactured in the same manner as in (1) of Example 1, except that polyarylate (PAR) was used instead of m-PPE.
(2) Manufacture of hollow fiber membrane cartridge 100

A hollow fiber membrane cartridge 100 was manufactured in the same manner as in (2) of Example 1, except that the inner case 110 made of polyarylate (PAR) was used.

<Comparative Example>

(1) Manufacture of inner case 110

An inner case 110 was manufactured in the same manner as in (1) of Example 1, except that polycarbonate (PC) was used instead of m-PPE.

(2) Manufacture of hollow fiber membrane cartridge 100

A hollow fiber membrane cartridge 100 was manufactured in the same manner as in (2) of Example 1, except that the inner case 110 made of polycarbonate (PC) was used.

The physical properties of the inner cases 110 and the hollow fiber membrane cartridges 100 manufactured according to Examples 1 to 5 and the comparative example were measured. The following measurement methods were used.

<Measurement of heat distortion temperature (HDT)>

1) The heat distortion temperature of the inner cases 110 manufactured according to Examples 1 to 5 and the comparative example was obtained by supporting opposite ends of a specimen in a heating bath, increasing the temperature of a heating medium from room temperature (25 °C) at a rate of 2 °C/min while applying a predetermined bending stress in the state in which a rod was in contact with the center of the specimen, and measuring the temperature of the heating medium when bending of the specimen reached a predetermined value.

2) More specifically, the heat distortion temperature of the inner cases 110 manufactured according to Examples 1 to 5 and the comparative example was measured according to ASTM D 648. In order to measure the heat distortion temperature, specimens according to Examples 1 to 5 and the Comparative Example in an unannealed state having a thickness of 4 mm were prepared and placed in a heating bath as described in 1), a pressure stress of 1.8 MPa was applied to the specimens while the temperature of a heating medium was increased from room temperature (25 °C) at a rate of 2 °C/min, and the temperature when each specimen was bent by 0.25 mm was measured as the heat distortion temperature (HDT).

<Measurement of hygroscopicity>

The hygroscopicity of the inner cases 110 manufactured according to Examples 1 to 5 and the comparative example was measured as follows.

The weight of specimens of the inner cases 110 manufactured according to Examples 1 to 5 and the comparative examples was measured as the "initial specimen weight" after drying in an oven at 50 °C for 24 hours and cooling in a desiccator. The specimens of the inner cases 110 with the measured initial specimen weight were immersed in water at 23 °C for 24 hours, and the weight of the specimens after removing the specimens from the water and wiping moisture off the surface was measured as the "specimen weight after moisture absorption". Subsequently, the amount of absorption (moisture absorption) of the specimens of the inner cases 110 was measured according to ASTM D 570 by comparing the "initial specimen weight" and the "specimen weight after moisture absorption".

The hygroscopicity of the inner cases 110 manufactured according to Examples 1 to 5 and the comparative example was calculated according to Equation 1 below.

[Formula 1]

$$\text{Hygroscopicity (\%)} = \frac{\text{specimen weight after moisture absorption} - \text{initial specimen weight}}{\text{initial specimen weight}} \times 100$$

<Measurement of weight reduction rate>

The weight reduction rate (WR) of the inner cases 110 manufactured according to Examples 1 to 5 and the comparative examples was measured by subjecting specimens of the inner cases 110 manufactured according to Examples 1 to 5 and the comparative example to high temperature and high humidity treatment using an autoclave.

As high temperature and high humidity treatment conditions for measuring the weight reduction rate (WR) according to an embodiment of the present disclosure, the specimen of the inner case 110 was placed in an autoclave containing water, the temperature of the autoclave was set to 120 °C ± 3 °C, and high temperature and high humidity treatment was performed for 200 hours.

The weight reduction rate (WR) of the inner cases 110 manufactured according to Examples 1 to 5 and the comparative example was calculated according to Equation 2 below.

$$[\text{Equation 2}]$$
$$\mathrm{WR}(\%) = \frac{W1 - W2}{W1} \times 100$$

In Equation 2, W1 is the weight of the specimen of the inner case 110 before high temperature and high humidity treatment, and W2 is the weight of the specimen of the inner case 110 after the high temperature and high humidity treatment.

<Evaluation of delamination characteristics>

The delamination characteristics of the hollow fiber membrane cartridges 100 manufactured according to Examples 1 to 5 and the comparative example was evaluated by checking delamination between the inner case 110 and potting portions 131 and 132 after high temperature and high humidity treatment of the hollow fiber membrane cartridges 100 manufactured according to Examples 1 to 5 and the comparative example using an autoclave.

As the high temperature and high humidity treatment conditions for evaluating the delamination characteristics according to an embodiment of the present disclosure, the hollow fiber membrane cartridges 100 manufactured according to Examples 1 to 5 and the comparative example were placed in an autoclave containing water, the temperature of the autoclave was set to 120 °C ± 3 °C, and high temperature and high humidity treatment was performed for 200 hours.

When the inner case 110 and the potting portions 131 and 132 were spaced apart from each other or separated from each other, delamination was evaluated as occurring between the inner case 110 and the potting portions 131 and 132.

<Measurement of coefficient of thermal expansion (CTE) >

The coefficient of thermal expansion (CTE) of the inner cases 110 manufactured according to Examples 1 to 5 and the comparative example was measured using a TMA (TA Instrument, Q400).

Specifically, the coefficient of linear thermal expansion of specimens of the inner cases 110 manufactured in Examples 1 to 5 and the comparative example at -30 to 30 °C was measured twice in accordance with a TMA-method and ASTM D 696, and the average value thereof was taken as the coefficient of thermal expansion (CTE). The dimensions of each of the specimens of the inner cases 110 was 6 mm (W) × 6 mm (L) × 4 mm (T), and the temperature increase rate was 5 °C/min.

<Measurement of specific gravity>

The specific gravity of the inner cases 110 manufactured according to Examples 1 to 5 and the comparative example was measured in accordance with ASTM D 792 using an underwater substitution method of calculating the specific gravity of each of the specimens of the inner cases 110 by measuring the mass of the specimen in air and measuring the apparent mass upon immersion in a liquid.

The results of measurements are shown in Table 1 below.

[Table 1]

| | Polymer resin | Heat distortion temperature (°C) | Hygroscopicity (%) | Weight reduction rate (%) | Delamination | Coefficient of thermal expansion (mm/mm/°C) | specific gravity (g/cm$^3$) |
|---|---|---|---|---|---|---|---|
| Example 1 | m-PPE | 145 °C | 0.1% | 6% | X | 60 × 10$^{-6}$ mm/mm/°C | 1.1 g/cm$^3$ |
| Example 2 | PPSU | 180 °C | 0.4% | 8% | X | 50 × 10$^{-6}$ mm/mm/°C | 1.4 g/cm$^3$ |

(continued)

| | Polymer resin | Heat distortion temperature (°C) | Hygroscopicity (%) | Weight reduction rate (%) | Delamination | Coefficient of thermal expansion (mm/mm/°C) | specific gravity (g/cm$^3$) |
|---|---|---|---|---|---|---|---|
| Example 3 | PSU | 165 °C | 0.5% | 9% | X | 60 x 10$^{-6}$ mm/mm/°C | 1.3 g/cm$^3$ |
| Example 4 | PEEK | 155 °C | 0.15% | 5% | X | 50 x 10$^{-6}$ mm/mm/°C | 1.3 g/cm$^3$ |
| Example 5 | PAR | 175 °C | 0.3% | 7% | X | 60 x 10$^{-6}$ mm/mm/°C | 1.2 g/cm$^3$ |
| Comparative Example | PC | 117 °C | 1. 5% | 40% | O | 80 x 10$^{-6}$ mm/mm/°C | 1.2 g/cm$^3$ |

Referring to Table 1, it can be seen that the inner cases 110 and the hollow fiber membrane cartridges 100 according to Examples 1 to 5 have excellent heat distortion temperature, excellent hydrolysis resistance, low hygroscopicity, a low coefficient of thermal expansion, and low specific gravity. In contrast, it can be seen that the inner case 110 and the hollow fiber membrane cartridge 100 according to the comparative example have a high coefficient of thermal expansion and excellent specific gravity but have low heat distortion temperature and high hygroscopicity.

In particular, after high temperature and high humidity treatment using the autoclave, the weight reduction rate of the specimen of the inner case 110 according to the comparative example was 40%.

In addition, after high temperature and high humidity treatment using the autoclave, delamination appears between the inner case 110 and the potting portions 131 and 132 in the hollow fiber membrane cartridge 100 according to the comparative example, which indicates a lack of hydrolysis resistance.

The above description has been made merely to illustrate the technical idea of the present disclosure, and those skilled in the art will appreciate that various variations and modifications are possible without departing from the intrinsic features of the present disclosure. In addition, the embodiments disclosed in the present disclosure are provided to describe the technical idea of the present disclosure, rather than to limit the technical idea of the present disclosure, and the scope of the technical idea of the present disclosure is not limited by the embodiments. Therefore, the scope of protection of the present disclosure should be determined by the appended claims, and all technical ideas within the range equivalent to the appended claims should be understood as falling within the scope of rights of the present disclosure.

[Description of Reference Numerals]

100: Hollow fiber membrane cartridge 110: Inner case
120: Hollow fiber membrane 121: Hollow
131: First potting portion 132: Second potting portion
200: Humidifier for a fuel cell 210: Mid-case
211: Off-gas inlet 212: Off-gas outlet
213: Resin layer 221: First cap
222: Second cap

## Claims

1.   A hollow fiber membrane cartridge comprising:

an inner case having an inner space;
a plurality of hollow fiber membranes disposed in the inner space of the inner case;
a first porting portion disposed on one side of the inner case, the first porting portion being configured to fix one side of each of the plurality of hollow fiber membranes; and
a second porting portion disposed on the other side of the inner case, the second porting portion being configured to fix the other side of each of the plurality of hollow fiber membranes,

wherein the inner case has a heat distortion temperature of 120 °C or higher and a hygroscopicity of 1% or less.

2. The hollow fiber membrane cartridge according to claim 1, wherein the inner case has a hygroscopicity of 0.5% or less.

3. The hollow fiber membrane cartridge according to claim 1, wherein the inner case comprises a polymer resin.

4. The hollow fiber membrane cartridge according to claim 3, wherein the polymer resin comprises at least one selected from among polyphenylene ether (PPE), polyphenylsulfone (PPSU), polysulfone (PSU), polyetheretherketone (PEEK), and polyarylate (PAR).

5. The hollow fiber membrane cartridge according to claim 4, wherein polyphenylene ether (PPE) is polyphenylene ether (m-PPE) modified by a polystyrene-butadiene copolymer (HIPS).

6. The hollow fiber membrane cartridge according to claim 5, wherein m-PPE comprises 90 to 99 wt% of polyphenylene ether (PPE) and 1 to 10 wt% of a polystyrene-butadiene copolymer (HIPS) based on a total weight of m-PPE.

7. The hollow fiber membrane cartridge according to claim 1, wherein

the inner case has a weight reduction rate of 10% or less after high temperature and high humidity treatment, the high temperature and high humidity treatment meaning that the inner case is placed in an autoclave containing water, a temperature of the autoclave is set to 120 °C ± 3 °C, and high temperature and high humidity treatment is performed for 200 hours.

8. The hollow fiber membrane cartridge according to claim 1, wherein the inner case has a coefficient of thermal expansion (CTE) of 100 x $10^{-6}$ mm/mm/°C or less.

9. The hollow fiber membrane cartridge according to claim 1, wherein the inner case has a specific gravity of 1.5 g/cm$^3$ or less.

10. A humidifier for a fuel cell, the humidifier comprising:

a mid-case having an inner space, an off-gas inlet, and an off-gas outlet;
the hollow fiber membrane cartridge according to any one of claims 1 to 9, the hollow fiber membrane cartridge being disposed in the inner space of the mid-case;
a first cap coupled to one end of the mid-case; and
a second cap coupled to the other end of the mid-case.

11. A fuel cell comprising:

a cell stack; and
the humidifier according to claim 10, the humidifier being connected to the cell stack.

# FIG. 1

# FIG. 2

120

121

# FIG. 3

<table>
<tr><td colspan="2" align="center">**INTERNATIONAL SEARCH REPORT**</td><td>International application No.<br>**PCT/KR2023/010918**</td></tr>
</table>

**A.    CLASSIFICATION OF SUBJECT MATTER**

**B01D 63/02**(2006.01)i; **H01M 8/04119**(2016.01)i; **C08L 71/12**(2006.01)i; **C08L 25/10**(2006.01)i

According to International Patent Classification (IPC) or to both national classification and IPC

**B.    FIELDS SEARCHED**

Minimum documentation searched (classification system followed by classification symbols)

B01D 63/02(2006.01); B01D 61/00(2006.01); B01D 63/04(2006.01); B01D 69/08(2006.01); C08L 71/12(2006.01);
C08L 77/00(2006.01); F16K 1/16(2006.01); H01M 8/04119(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연료 전지(fuel cell), 전지 스택(cell stack), 연료 전지용 가습기(humidifier for
fuel cell), 중공사막 카트리지(hollow fiber membrane cartridge), 이너 케이스(inner case), 포팅부(porting part), 미드 케이스
(mid case), 배가스 유입구(exhaust gas inlet), 배가스 배출구(exhaust gas outlet), 캡(cap), 열변형 온도(heat deflection
temperature), 흡습성(hygroscopicity), 폴리페닐렌에테르(polyphenylene ether), 폴리스타이렌-부타다이엔 공중합체
(polystyrene-butadiene copolymer)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2022-0043352 A (KOLON INDUSTRIES, INC.) 05 April 2022 (2022-04-05)<br>See paragraphs [0023]-[0032]; and figure 4. | 1-11 |
| Y | JP 2017-517623 A (LG CHEM LTD.) 29 June 2017 (2017-06-29)<br>See paragraphs [0015], [0021], [0049]-[0050], [0057]-[0060], [0073], [0079] and [0090]. | 1-11 |
| A | KR 10-2009-0071556 A (TORAY INDUSTRIES, INC.) 01 July 2009 (2009-07-01)<br>See entire document. | 1-11 |
| A | KR 10-2010-0129285 A (NOK CORPORATION) 08 December 2010 (2010-12-08)<br>See entire document. | 1-11 |

✓ Further documents are listed in the continuation of Box C.        ✓ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **30 October 2023** | **31 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/010918** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2010-0171059 A1 (KOUROGI, Hidehiro et al.) 08 July 2010 (2010-07-08)<br>    See entire document. | 1-11 |

Form PCT/ISA/210 (second sheet) (July 2022)

INTERNATIONAL SEARCH REPORT
Information on patent family members

International application No.

**PCT/KR2023/010918**

| Patent document cited in search report | | | | Publication date (day/month/year) | Patent family member(s) | | | Publication date (day/month/year) |
|---|---|---|---|---|---|---|---|---|
| KR | 10-2022-0043352 | A | | 05 April 2022 | | None | | |
| JP | 2017-517623 | A | | 29 June 2017 | CN | 106488956 | A | 08 March 2017 |
| | | | | | CN | 106488956 | B | 12 November 2019 |
| | | | | | EP | 3138877 | A1 | 08 March 2017 |
| | | | | | JP | 6436600 | B2 | 12 December 2018 |
| | | | | | KR | 10-1757578 | B1 | 13 July 2017 |
| | | | | | KR | 10-2016-0110086 | A | 21 September 2016 |
| | | | | | US | 10329423 | B2 | 25 June 2019 |
| | | | | | US | 2017-0198140 | A1 | 13 July 2017 |
| | | | | | WO | 2016-144011 | A1 | 15 September 2016 |
| KR | 10-2009-0071556 | A | | 01 July 2009 | CN | 101516479 | A | 26 August 2009 |
| | | | | | CN | 101516479 | B | 19 September 2012 |
| | | | | | EP | 2067521 | A1 | 10 June 2009 |
| | | | | | JP | 5262111 | B2 | 14 August 2013 |
| | | | | | KR | 10-1441707 | B1 | 17 September 2014 |
| | | | | | US | 2010-0072124 | A1 | 25 March 2010 |
| | | | | | US | 8307991 | B2 | 13 November 2012 |
| | | | | | WO | 2008-035593 | A1 | 27 March 2008 |
| KR | 10-2010-0129285 | A | | 08 December 2010 | CN | 101959582 | A | 26 January 2011 |
| | | | | | CN | 101959582 | B | 21 August 2013 |
| | | | | | EP | 2258464 | A1 | 08 December 2010 |
| | | | | | EP | 2258464 | B1 | 11 September 2013 |
| | | | | | JP | 2009-208013 | A | 17 September 2009 |
| | | | | | JP | 5354248 | B2 | 27 November 2013 |
| | | | | | KR | 10-1269507 | B1 | 30 May 2013 |
| | | | | | US | 2011-0000842 | A1 | 06 January 2011 |
| | | | | | US | 8414693 | B2 | 09 April 2013 |
| | | | | | WO | 2009-110114 | A1 | 11 September 2009 |
| US | 2010-0171059 | A1 | | 08 July 2010 | CN | 101680560 | A | 24 March 2010 |
| | | | | | CN | 101680560 | B | 01 June 2011 |
| | | | | | EP | 2163798 | A1 | 17 March 2010 |
| | | | | | EP | 2163798 | B1 | 13 March 2013 |
| | | | | | JP | 2008-291976 | A | 04 December 2008 |
| | | | | | JP | 5137465 | B2 | 06 February 2013 |
| | | | | | KR | 10-2010-0023814 | A | 04 March 2010 |
| | | | | | WO | 2008-146866 | A1 | 04 December 2008 |

Form PCT/ISA/210 (patent family annex) (July 2022)